# EUROPÄISCHE PATENTSCHRIFT

(11) **EP 0 509 980 B1**
(45) Veröffentlichungstag und Bekanntmachung des Hinweises auf die Patenterteilung: **25.01.1995**
(21) Anmeldenummer: 92890084.4
(22) Anmeldetag: 08.04.1992
(51) Int. Cl.: B09B 1/00

(54) **Verfahren zum, insbesondere beschleunigten, aeroben mikrobiologischen Abbau von biologischen Substanzen**
Method for, in particular accelerated, aerobic microbiological decomposition of biological substances
Procédé pour la décomposition microbiologique aérobic, notamment accélérée, de substances biologiques

(30) Priorität: 16.04.1991 AT 799/91
(43) Veröffentlichungstag der Anmeldung: 21.10.1992
(73) Patentinhaber: PORR UMWELTTECHNIK AKTIENGESELLSCHAFT, 1190 Wien (AT); G. HINTEREGGER & SÖHNE BAUGESELLSCHAFT m.b.H., 1220 Wien (AT); GRÜN UND BILFINGER BAUGESELLSCHAFT m.b.H., 1120 Wien (AT)
(72) Erfinder: Burner, Eckehard, Dipl.-Ing., A-2380 Perchtoldsdorf (AT); Ranner, Dietrich, Dipl.-Ing., A-5301 Eugendorf, Salzburg (AT)
(74) Vertreter: Widtmann, Georg, Dipl.-Ing. Dr. techn.

(56) Entgegenhaltungen:
- WO-A-90/03232
- DE-A- 3 535 328
- DE-A- 3 601 979
- DE-A- 3 605 042
- DE-A- 3 703 442
- DE-A- 3 739 126
- DE-C- 3 246 711
- US-A- 4 765 902

## Beschreibung

Die Erfindung bezieht sich auf ein Verfahren zum, insbesondere beschleunigten, aeroben mikrobiologischen Abbau von biologischen Substanzen, z. B. Hausmüll mit biologischen Abfallstoffen, die von einer Deckschichte, z. B. Erdreich, Lehm, Folie, abgedeckt ist.

Der Haus- aber auch der Gewerbemüll weist immer mehr einen größeren Anteil an mikrobiologisch abbaubaren Substanzen, u. zw. biologischen Substanzen, auf. Diese Substanzen unterliegen kurzfristig einer mikrobiologischen Fermentation, so daß nicht nur aus hygienischer Sicht für eine regelmäßige und kurzfristige Entsorgung Rechnung getragen werden muß. Der meist von Gemeinden oder Verbanden eingesammelte Müll kann entweder verbrannt werden, wobei in diesem Falle die entstehenden Rauchgase einer Nachbehandlung unterliegen und die Schlacke gelagert werden muß, oder auch direkt deponiert werden. Bei derartigen Mülldeponien soll einerseits dafür Sorge getragen werden, daß kein direkter Zutritt zum Grundwasser gegeben ist. Dies kann entweder durch geeignete geologische Standortwahl oder auch durch Vorsehen von eigenen Trennschichten erreicht werden. Weiters werden bei Erreichen einer bestimmten Endhöhe derartige Mülldeponien in der Regel mit einer Deckschichte abgedichtet, die beispielsweise aus Lehm oder Erde bestehen kann. Im Normalfall, wenn der Müll in einer derartigen Deponie noch einer anaeroben Fermentation unterliegt, soll für die Ableitung der Gase, die einerseits geruchsbelästigend und anderseits explosiv sind, Sorge getragen werden. Hiefür ist es bekannt, daß in derartigen Deponien unterschiedlichst aufgebaute Gasableitsysteme vorgesehen sind, wobei der Gehalt an brennbaren Gasen so hoch sein kann, daß nicht nur mehr ein Abfackeln der Gase durchgeführt wird, sondern die Gase einer energetischen Nutzung zugeführt werden. So können beispielsweise Gasmotoren betrieben werden od. dgl.

Ist nun eine Verlagerung von Mülldeponien erforderlich, sei es um eine Kontaminierung der Umwelt, z. B. des Grundwassers, zu vermeiden oder auch um den Standort der Deponie einem anderen Verwendungszweck zuzuführen, ist es erforderlich, die deponierten Substanzen geruchlich zu dekontaminieren und gleichzeitig in eine Form überzuführen, daß zumindest bei der Dislozierung, z. B. zu einer neuen Deponie, keine Geruchsbelästigung stattfindet.

Zu diesem Zwecke wurde bereits vorgeschlagen, die anaerobe Fermentation, auf welche in der Regel die Geruchsbelästigung zurückzuführen ist, durch Einfrieren der Substrate, wie z. B. des teilfermentierten Hausmülls, zu unterbinden. Obwohl ein derartiges Verfahren durchaus funktionsfähig ist, besteht der Nachteil darin, daß ein sehr hoher Energieaufwand zum Abkühlen der Substrate erforderlich ist, und anschließend beim Abbau der Mülldeponie ein erhöhter Energieaufwand zum Einsatz kommt, um das sodann felsähnliche Material, da das gefrorene Wasser als Bindemittel dient, in transportfähige Größen zu zerkleinern.

Es ist auch bereits ein Verfahren bekannt geworden, bei dem durch zwangsweise Einführung von Luft, gegebenenfalls mit Sauerstoff angereichert, die ursprünglich vorliegende anaerobe Fermentation in eine aerobe Fermentation übergeleitet wird. Bei einer einige Tage bis Wochen dauernden Fermentation ist dann sichergestellt, daß während des Abbaues der Mülldeponie und der Verführung der Substanzen keine Geruchsbelästigung auftritt, da eine aerobe Fermentation vorliegt. Zur Beschleunigung des aeroben Abbaues der Substrate in der Mülldeponie kann die, gegebenenfalls mit Sauerstoff, angereicherte Luft auch in Stoßwellen in das Substrat eingebracht werden, wobei gleichzeitig eine Absaugung der Luft gemeinsam mit den Fermentationsgasen durchgeführt wird siehe beispielsweise DE-A-3739126. Obwohl ein derartiges Verfahren, was die Geruchsbelästigung betrifft, durchaus erfolgreich ist, besteht gerade in der Anfangsphase ein langsamer Startvorgang, wobei die Gefahr besteht, daß hochexplosive Methan/Luft-Gemische über längere Zeiträume ins Freie gelangen.

Die vorliegende Erfindung hat sich zum Ziel gesetzt, ein Verfahren zu schaffen, das neben der Herabsetzung der Geruchsbelästigung, z. B. beim Abbau von Mülldeponien, auch erlaubt, Störungen, wie sie beispielsweise durch explosive Luft/Gas-Gemische gegeben sind, zu vermeiden, und die einen sehr raschen Abbau und damit Mineralisierung der biogenen Substanzen erlaubt.

Das erfindungsgemäße Verfahren zum, insbesondere beschleunigten, aeroben mikrobiologischen Abbau von biologischen Substanzen, z. B. Hausmüll mit biologischen Abfallstoffen, die von einer Deckschichte, z. B. Erdreich, Lehm, Folie, abgedeckt sind und gegebenenfalls gegenüber dem Grundwasser mit zumindest einer Trennschichte, z. B. Lehmschichte, Folie, abgetrennt sind, insbesondere zum Abbruch von mikrobiologischem Abbau mit geruchsbelästigenden Reaktionsprodukten zur zumindest vorübergehenden Geruchsstabilisierung, gegebenenfalls zum Verbringen von Altdeponien, wobei über Gaszufuhrleitungen gezielt Luft mit Atmosphärenüberdruck, gegebenenfalls mit weiterem Sauerstoffzusatz, zu den biologischen Substanzen einer damit zwangsbelüfteten Ablagerung geleitet wird und über Gasabzugsleitungen Gase von den biologischen Substanzen abgezogen, insbesondere abgesaugt, werden, besteht im wesentlichen darin, daß über die Gaszuführungsleitungen eine, insbesondere um zumin-

dest 5,0 Vol.-%, vorzugsweise um zumindest 10,0 Vol.-%, geringere Luftmenge, vorzugsweise integriert über Minuten, insbesondere integriert über 5 bis 10 Sekunden, gezielt zugeleitet wird als über die Gasabzugsleitungen als Gasmenge abgesaugt wird und daß gegebenenfalls die Gaszuführungsleitungen zu den biologischen Substanzen gegenüber den nicht gezielt mit Luft beaufschlagten organischen Substanzen durch die Gasabzugsleitungen begrenzt wird. Die an ihrer zur Atmosphäre weisenden Seite mit Lehm oder Erdreich abgedeckten Mülldeponien, also Deponien von biologischen Substanzen, weisen in der Regel eine anaerobe Fermentation auf. Durch Zufuhr von Luft, in der gegebenenfalls Sauerstoff angereichert ist, kann die anaerobe Fermentation in eine keine Geruchsbelästigung aufweisende aerobe Fermentation übergeführt werden. Auch diese Gase, die bei der Fermentation entstehen, sollen nicht unmittelbar an die Atmosphäre abgegeben werden, sondern werden über Gasabzugsleitungen, beispielsweise in ein biologisches Filter, eingeleitet. Durch die Absaugung der Gase und der Luftzufuhr wird die Fermentation beschleunigt. Dadurch, daß eine größere Luftmenge abgesaugt wird als zwangsweise zugeführt wird, wird erreicht, daß kein willkürlicher Austritt der Gase aus der Deponie erfolgt, wobei ein derartiger willkürlicher Austritt zwei wesentliche Benachteiligungen beinhaltet. Einerseits wäre, insbesondere in der Anfangsphase, eine Geruchsbelästigung gegeben, da die Gase unbehandelt zur Atmosphäre austreten, und anderseits wäre ebenfalls in der Anfangsphase eine besonders große Gefahr wegen Explosionen gegeben. Durch die Maßnahme, die Gaszufuhrleitungen zu den biologischen Substanzen gegenüber den nicht gezielt mit Luft beaufschlagten organischen Substanzen durch Gasabzugsleitungen abzugrenzen, wird verhindert, daß durch die gezielte Luftzufuhr Gas bei der noch nicht zwangsbelüfteten Deponie ausgetrieben wird, sondern es wird dort ebenfalls im Grenzbereich ein gewisser Unterdruck aufrecht erhalten, so daß auch hier keine zusätzlichen Gasaustritte und die damit bedingten Nachteile auftreten.

Werden die Gaszufuhrleitungen zu den biologischen Substanzen allseitig von Gasabzugsleitungen, insbesondere zur Abgrenzung der zwangsbelüfteten Ablagerung, vorgesehen, so ist damit eine besonders gute Belüftung innerhalb der Deponie gewährleistet, da einerseits Gas mit Druck zugeführt wird und dieses Gas an benachbarten Stellen abgesaugt wird, wobei anderseits dadurch, daß die Gaszufuhrleitungen von Gasabzugsleitungen ailseitig umgeben sind, also z. B. an vier Seiten, sichergestellt ist, daß durch die eingeleiteten Gase keine Deponiegase ins Freie geleitet werden, sondern über die Absaugleitungen einer Behandlung zugeführt werden können.

Wird das Gas von einem tieferen Horizont abgesaugt als die Luft zugeführt wird, so kann mit dieser an sich einfachen Maßnahme ein unkontrolliertes Austreten der Gase aus der Deponie verhindert werden, da die, insbesondere geruchsbelästigenden, Gase schwerer als Luft sind.

Wird der Sauerstoffgehalt der über die Gaszufuhrleitungen zugeleiteten Luft zumindest einmal erhöht, so kann eine stetige Überführung der anaeroben Fermentation in eine aerobe Fermentation durchgeführt werden, ohne toxische Effekte an den in der Deponie inaktiv vorliegenden aerob arbeitenden Mikroorganismen zu verursachen.

Erfolgt das Einblasen der Luft oder des Luftsauerstoffgemisches diskontinuierlich, so können Wachstumsimpulse zur beschleunigten Umsetzung erreicht werden.

Wird die über die Gaszufuhrleitungen zugeführte Luft mit Wasserdampf beladen, so kann sichergestellt werden, daß bei an sich trockenen Deponien, die auch nur eine geringe Zufuhr an Sickerwasser haben, selbst nach wochenlangem Zuführen der Luft die Feuchtigkeit im Substrat hoch genug ist, um eine Fermentation zu gewährleisten.

Werden, insbesondere vor der Luftzufuhr, über die Gaszufuhrleitungen und/oder Gasabzugsleitungen Mikroorganismen, z. B. suspendiert in Wasser, den biologischen Substanzen zugeführt, so ist ein Impfprozeß gegeben, der z. B. bei lang in anaerober Fermentation befindlichen Deponien oder auch bei Deponien, in welchen durch zu starker exothermer Fermentation die Mikroorganismen abgetötet wurden, eine erneute Fermentation durchgeführt werden kann.

Werden über die Gaszufuhrleitungen und/oder Gasabzugsleitungen Nährstoffe, Spurenelemente od. dgl. zur beschleunigten Fermentation der biologischen Substanzen diesen zugeführt, so kann auf besonders einfache Art und Weise ein Mangel an diesen Substanzen behoben werden.

Wird die Temperatur der organischen Substanzen und/oder der abgeleiteten Gase gemessen und die Luftzufuhr und/oder Sauerstoffgehalt darnach gesteuert, so kann ein optimales Abbauverhalten eingehalten werden, ohne daß dadurch die Mikroorganismen durch zu hohe Temperaturen abgetötet werden.

Wird bei Überschreiten einer oberen Temperaturgrenze, vorzugsweise 50 _{°} C, insbesondere 70 C, Luft ohne weiteren Sauerstoffzusatz eingeleitet, worauf bei Absinken der Temperatur, insbesondere unter 40 C, der Sauerstoffgehalt wieder erhöht wird, so kann eine besonders hohe Fermentationsgeschwindigkeit eingehalten werden, ohne daß dadurch eine Abtötung der Mikroorganismen, welche für den Abbau der organischen Substanzen verantwortlich sind, bedingt wird.

Wird bei Übersteigen einer oberen Temperaturgrenze, vorzugsweise 50 _{°} C, insbesondere 70 _{°} C, das abgesaugte Gas, mit Stickstoff und/oder Kohlendioxid angereicherte Gase, insbesondere ihre technischen Gase, uber die Gaszufuhrleitungen dem biologischen Substanzen erneut zugeführt, so kommt ein mit Sauerstoff abgereichertes Gas zu den biologischen Substanzen, so daß ein besonders schnelles Absinken der Fermentationsgeschwindigkeit gewährleistet ist.

Werden die abgesaugten Gase abgefackelt, so ist, insbesondere am Anfang der Absaugung, eine besonders sicherere Entsorgung der Gase gegeben.

Werden die abgesaugten Gase über ein Biofilter an die Umwelt abgegeben, so ist bei Normalbetrieb eine besonders vorteilhafte weitere Geruchsstabilisierung der abgesaugten Gase gegeben, da über die im Biofilter vorhandenen Mikroorganismen ein weiterer mikrobiologischer Abbau stattfindet, wobei der im Biofilter vorliegende Humus auf Grund seiner ionenaustauscherhaften Wirkung saure und alkalische Substanzen festhält und weiters auch als Adsorptionsmittel auf Grund seines strukturierten Aufbaues dient.

Im folgenden wird die Erfindung anhand der schematischen Darstellung näher erläutert.

Die Deponie 1 weist eine vertikale Erstreckung von 9 m auf und besteht gemischt aus Bauschutt, Hausmüll und gewerblichem Müll. Um selbst ein Durchtreten von Sickerwässern zu verhindern, ist eine Dichtschichte 2 vorgesehen, die neben Lehm eine Polypropylenfolie aufweist. Die Deponie weist an ihrer oberen Fläche eine Abdeckung 3 aus einem Gemisch von Erde und Lehm auf. Die Gaszufuhrleitungen 4 reichen über Zuleitungsrohre 5 und Lanzen 6 in die Mülldeponie. Die Lanzen sind perforiert und dienen als Einleitorgane für Luft in die Deponie. Die Lanzen können bei Bedarf auch schräg oder horizontal angeordnet werden. Der Kompressor 7, welcher in 10 Sekunden 14,5 Nm³ Luft, bezogen auf Atmosphärendruck, der Deponie zuführt, saugt die Luft aus der Atmosphäre und diskontinuierlich Sauerstoff aus einem Behälter 8 an. Die Luft kann sodann nach einem nicht dargestellten Ölabscheider über einen Befeuchter 9 in die Zuführungsleitungen 4 gelangen. Der Überdruck zur Atmosphäre kann bis zu 10 Bar betragen, wobei auch einzelne Druckstöße zur besseren Durchdringung der Gase in der Deponie in Abständen von mehreren Sekunden in Millisekundengrö- ßenordnung durchgeführt werden können. Im vorliegenden Beispiel wird mit einem Überdruck von 3 bis 4 Bar gearbeitet. Über die Vakuumpumpe 10, die bei einem Druck von 0,1 Bar arbeitet und in den Absauglanzen 11 0,6 Bar bedingt, werden 16 Nm³ Gase, bezogen auf den Atmosphärendruck, abgesaugt. Die Gase gelangen sodann in ein Biofilter 12, in dem im wesentlichen biologisch aerob verrottende Substanzen angeordnet sind. Das Biofilter 12 weist einen Durchsatz entsprechend der abgesaugten Gasmenge auf. Die Abzugsleitungen 13 verbinden die Absauglanzen 11 mit der Vakuumpumpe 10, wobei der Vakuumpumpe eine Abfackelungseinrichtung 14 nachgeschaltet ist.

Bei der Durchführung des erfindungsgemäßen Verfahrens wird nun so vorgegangen, daß über die Absauglanzen 11, die tiefer als die Lanzen 6 angeordnet sind, das in der Deponie vorliegende Deponiegas abgesaugt wird. Der Druck in der Vakuumpumpe beträgt ca. 100 Millibar. Um ein schnelleres Absaugen zu gewährleisten, kann zusätzlich über einen Teil der Lanzen 6, welche für die Zufuhr von Luft und Sauerstoff bestimmt sind, an die Abzugsleitung 13 angeschlossen werden. Die Gase werden vorerst über die Abfackeleinrichtung 14 verbrannt. Gleichzeitig wird über den Kompressor 7 Luft, die über den Befeuchter 9 und über einen vorgeschalteten Ölabscheider geleitet wird, über die Gaszufuhrleitung 4 mit Lanzen 6 der Deponie zugeführt. Gleichzeitig wird über die Absauglanzen 11 auch das Gas von nunmehr von der anaeroben auf aerobe Fermentation umgestellten Abbau der organischen Substanzen abgezogen. Dieses Gas gelangt nun über das Biotilter 12 an die Umwelt. Gleichzeitig wird die Temperatur des Substrates als auch die des abgezogenen Gases gemessen. Übersteigt die Temperatur des Substrates 50 C oder höchstens 70 C, so wird die Sauerstoffzufuhr, weiche zur Steigerung der Fermentation über den Sauerstoffbehälter dem Kompressor 7 und damit den Lanzen 6 zugegeben wurde, unterbunden. Diese Sauerstoffkonzentration kann bis zu einem Zusatz von 20 Vol.-% Sauerstoff betragen. Bei einer derartigen Temperaturerhöhung ist nun einerseits die zusätzliche Sauerstoffzufuhr unterbrochen. Ist eine weitere Verminderung der Reaktionsgeschwindigkeit erwünscht, so kann die Vakuumpumpe 12 mit dem Kompressor 7 verbunden werden, so daß die abgesaugten Gase erneut in die Deponie eingeleitet werden, so daß der Sauerstoffgehalt der in die Deponie eingeleiteten Gase gegenüber der Luft noch weiter abgesenkt werden kann. Nach Erreichen der erwünschten Temperaturen kann erneut normale Luft bzw. Luft mit Sauerstoffzusatz in die Deponie eingeleitet werden. Anstelle der abgesaugten Gase kann auch technisch reiner Stickstoff oder Kohlendioxid treten.

Falls die Fermentation nicht im gewünschten Ausmaß einsetzt bzw. unterbricht, besteht die Möglichkeit, daß entweder ein Mangel an bestimmten Nährstoffen bzw. Spurenelementen zu einer Verlangsamung des Wachstums der Mikroorganismen geführt hat, oder daß aus anderen Gründen, insbesondere zu hohe Temperatur, die Mikroorganismen abgestorben sind. In diesem Falle kann sowohl über die Absaugleitungen als auch die Zufuhrleitungen die Zufuhr von Nährstofflösungen, gegebenenfalls Spurenelementlösungen, oder auch Suspensionen von Mikroorganismen erfolgen, wodurch nach kurzer Zeit wieder ein störungsfreier Betrieb erreicht wird.

Nach entsprechender Umleitung der anaeroben Fermentation in eine aerobe Fermentation ist eine Geruchsstabilisierung der Deponie eingetreten, so daß ein mechanischer Abbau derselben mit anschließender Verführung durchgeführt werden kann, wobei ein leichter Abbau der Deponie möglich ist. Falls keine Verführung erwünscht ist, kann eine beschleunigte Beendigung der gesamten Fermentation und damit Explosionsgefahr und Geruchsbelästigung erreicht werden.

Ist nun ca. nach 2 bis 3 Wochen eine Geruchsstabilisierung in der Deponie erreicht, so können sowohl die Lanzen für die Luftzufuhr als auch zur Absaugung der Gase versetzt werden und in ein neues noch nicht behandeltes Feld der Deponie übergeführt werden. Die von den Rohrleitungen befreite Deponie kann sodann mechanisch abgebaut werden, wobei der Feinanteil als Humus verwertet werden kann. Die Versetzung erfolgt so, daß als Abgrenzung der Luftzufuhr gegenüber der noch nicht behandelten und belüfteten Deponie die Luftzufuhr durch Gasabzugsleitungen abgegrenzt ist. Die Gasabzugs- bzw. Zufuhrleitungen in der Deponie können durch perforierte Rohre, Brunnen, die mit Schotter gefüllt sind oder andere geeignete Einrichtungen gebildet sein.

Bei der Ausbildung der Rohrleitungen muß berücksichtigt werden, daß, je höher der Unterdruck in einer Rohrleitung ist, desto höher die freie Weglänge der Moleküle und damit umso größer der Querschnitt der Rohrleitungen sein muß. Wird diese Vorgangsweise nicht berücksichtigt, so kommt es zu einem sehr raschen Druckabfall innerhalb der Unterdruckgasleitungen. Das Material der Luftzuleitungen unterliegt keinen besonderen chemischen Beanspruchungen, so daß hier gängige Materialien zum Einsatz kommen können. Die aus der Deponie abgesaugten Gase können jedoch chemisch aggressiv sein, beispielsweise saure Bestandteile enthalten, so daß eine entsprechende Materialauswahl eingehalten werden soll, falls die Vorrichtungen längerfristig zum Einsatz kommen.

Zum Impfen mit Mikroorganismen können wäßrige Auszüge aus aerobem verrottendem Material, wie z. B. Humus od. dgl. oder auch aus dem im Biofilter vorliegenden Substanzen erzeugt werden.

Die Gasabzugsleitungen können Explosionsklappen aufweisen, um bei Betriebsstörungen eine Zerstörung der Anlage zu vermeiden.

Zur Regulierung des Druckes in den Lanzen können vor denselben manuell ferngesteuert oder automatisch einstellbare Ventile vorgesehen sein. Bei den Lanzen zur Absaugung können auch noch Vorrichtungen innerhalb der Lanzen vorgesehen sein, um die Querschnittsöffnungen, über die die Absaugung erfolgt, z. B. in Form eines Drehschiebers, einzustellen.

Um Wachstumsimpulse der Mikroorganismen und damit zum beschleunigten Umsatz der organischen Substanzen beizutragen, kann das Einblasen der Luft oder des Luftsauerstoffgemisches diskontinuierlich, z. B. stoßweise, langsam oder rasch ansteigend in der Strömungsgeschwindigkeit, durchgeführt werden.

## Patentansprüche

1. Verfahren zum, insbesondere beschleunigten, aeroben mikrobiologischen Abbau von biologischen substanzen, z. B. Hausmüll mit biologischen Abfallstoffen, die von einer Deckschichte, z. B. Erdreich, Lehm, Folie, abgedeckt sind, gegebenenfalls gegenüber dem Grundwasser mit zumindest einer Trennschichte, z. B. Lehmschichte, Folie, abgetrennt sind, insbesondere zum Abbruch von mikrobiologischem Abbau mit geruchsbelästigenden Reaktionsprodukten zur zumindest vorübergehenden Geruchstabilisierung, gegebenenfalls zum Verbringen von Altdeponien, wobei über Gaszufuhrleitungen gezielt Luft mit Atmosphärenüberdruck, gegebenenfalls mit weiterem Sauerstoffzusatz, zu den biologischen substanzen einer damit zwangsbelüfteten Ablagerung zugeleitet wird und über Gasabzugsleitungen Gase von den biologischen substanzen abgezogen, insbesondere abgesaugt, werden, dadurch gekennzeichnet, daß über die Gaszufuhrleitungen eine insbesondere um zumindest 5,0 Vol.-%, vorzugsweise um zumindest 10 Vol.-%, geringere Luftmenge, vorzugsweise integriert über Minuten, insbesondere integriert über 5 bis 10 Sekunden, gezielt zugeleitet als über die Gasabzugsleitungen als Gasmenge abgesaugt wird, und daß gegebenenfalls die Gaszufuhrleitung zu den biologischen substanzen gegenüber den nicht gezielt mit Luft beaufschlagten organischen substanzen durch die Gasabzugsleitungen abgegrenzt werden.

2. Verfahren nach Anspruch 1, dadurch gekennzeichnet, daß die Gaszufuhrleitungen zu den biologischen substanzen allseitig von Gasabzugsleitungen, insbesondere zur Abgrenzung der zwangsbelüfteten Ablagerung, vorgesehen werden.

3. Verfahren nach Anspruch 1 oder 2, dadurch gekennzeichnet, daß das Gas von einem tieferen Horizont abgesaugt als Luft zugeführt wird.

4. Verfahren nach Anspruch 1, 2 oder 3, dadurch gekennzeichnet, daß der Sauerstoffgehalt, der über die Gaszufuhrleitungen zugeleiteten Luft zumindest in einem Schritt erhöht wird.

5. Verfahren nach einem der Ansprüche 1 bis 4, dadurch gekennzeichnet, daß die Luft oder das Luftsauerstoffgemisch diskontinuierlich zugeleitet, insbesondere eingeblasen, wird.

6. Verfahren nach einem der Ansprüche 1 bis 5, dadurch gekennzeichnet, daß die über die Gaszufuhrleitungen zugeführte Luft mit Wasserdampf beladen wird.

7. Verfahren nach einem der Ansprüche 1 bis 6, dadurch gekennzeichnet, daß, insbesondere vor der Luftzufuhr, über die Gaszufuhrleitungen und/oder Gasabzugsleitungen Mikroorganismen, z. B. suspendiert in Wasser, den biologischen substanzen zugeführt werden.

8. Verfahren nach einem der Ansprüche 1 bis 7, dadurch gekennzeichnet, daß über die Gaszufuhrleitungen und/oder Gasabzugsleitungen Nährstoffe, Spurenelemente od. dgl. zur beschleunigten Fermentation der biologischen substanzen diesen zugeführt werden.

9. Verfahren nach einem der Ansprüche 1 bis 8, dadurch gekennzeichnet, daß die Temperatur der organischen substanzen und/oder der abgeleiteten Gase gemessen wird, und die Luftzufuhr und/oder Sauerstoffgehalt in Abhängigkeit von der Temperatur gesteuert wird.

10. Verfahren nach Anspruch 9, dadurch gekennzeichnet, daß bei Erreichen einer obereren Temperaturgrenze, vorzugsweise 50_{°} C, insbesondere 70 C, Luft ohne weiteren Sauerstoffzusatz eingeleitet wird, worauf bei Absinken der Temperatur, insbesondere unter 40* C, der Sauerstoffgehalt wieder erhöht wird.

11. Verfahren nach Anspruch 9 oder 10, dadurch gekennzeichnet, daß bei Erreichen einer oberen Temperaturgrenze, vorzugsweise 50_{°} C, insbesondere 70 _{°} C, das abgesaugte Gas, mit Stickstoff und/oder Kohlendioxid angereicherte Gas, insbesondere ihre technischen Gase, über die Gaszufuhrleitungen den biologischen Substanzen zugeführt wird.

12. Verfahren nach einem der Ansprüche 1 bis 11, dadurch gekennzeichnet, daß die abgesaugten Gase abgefackelt werden.

13. Verfahren nach einem der Ansprüche 1 bis 12, dadurch gekennzeichnet, daß die abgesaugten Gase über ein Biofilter an die Umwelt abgegeben werden.

## Claims

1. Process for, in particular accelerated, aerobic microbiological breakdown of biological substances, e.g. household refuse with biological waste substances, which are covered by a covering layer, e.g. earth, clay, sheet, possibly isolated from the groundwater with at least one isolating layer, e.g. layer of clay, sheet, in particular for stopping microbiological breakdown with malodorous reaction products for at least temporary odour stabilisation, possibly for moving old dumps, in which air at more than atmospheric pressure, possibly with further added oxygen, is systematically supplied to the biological substances by means of gas supply lines for forcibly aerated storage and gases are removed, in particular sucked, from the biological substances by means of gas removal lines, characterised in that a quantity of air is systematically supplied by means of the gas supply lines, preferably integrated over minutes, in particular integrated over 5 to 10 seconds, which is in particular at least 5.0% by volume, preferably at least 10% by volume, less than the quantity of gas sucked off by means of the gas removal lines, and in that possibly the gas supply lines to the biological substances are separated from the organic substances not being systematically supplied with air by the gas removal lines.

2. Process according to claim 1, characterised in that the gas supply lines to the biological substances are provided on all sides with gas removal lines, in particular for separating the forcibly aerated storage.

3. Process according to claim 1 or 2, characterised in that the gas is sucked from a deeper level than that at which air is supplied.

4. Process according to claim 1, 2 or 3, characterised in that the oxygen content of the air supplied by means of the gas supply lines is increased at least in one step.

5. Process according to one of claims 1 to 4, characterised in that the air or the air and oxygen mixture is supplied, in particular injected, discontinuously.

6. Process according to one of claims 1 to 5, characterised in that the air supplied by means of the gas supply lines is laden with water vapour.

7. Process according to one of claims 1 to 6, characterised in that micro-organisms, e.g. suspended in water, are supplied to the biological substances by means of the gas supply lines and/or gas removal lines, in particular before the supply of air.

8. Process according to one of claims 1 to 7, characterised in that nutrients, trace elements or the like are supplied to the biological substances for accelerated fermentation of these by means of the gas supply lines and/or gas removal lines.

9. Process according to one of claims 1 to 8, characterised in that the temperature of the organic substances and/or the removed gases is measured and the air supply and/or oxygen content is controlled as a function of the temperature.

10. Process according to claim 9, characterised in that on reaching an upper temperature limit, preferably 50 _{°} C, in particular 70 _{°} C, air without further added oxygen is introduced and then when the temperature drops, in particular below 40 °C, the oxygen content is increased again.

11. Process according to claim 9 or 10, characterised in that on reaching an upper temperature limit, preferably 50 _{°} C, in particular 70 _{°} C, the gas sucked off, gases enriched with nitrogen and/or carbon dioxide, in particular their technical gases, are supplied to the biological substances by means of the gas supply lines.

12. Process according to one of claims 1 to 11, characterised in that the gases sucked off are burnt off.

13. Process according to one of claims 1 to 12, characterised in that the gases sucked off are given off to the environment through a biological filter.

## Revendications

1. Procédé de dégradation accélérée par des micro-organismes aérobies de substances biologiques, par exemple des ordures ménagères contenant des déchets biologiques, qui sont couverts par une couche de couverture, par exemple de la terre, de la glaise ou une feuille, et qui sont éventuellement séparés de la nappe phréatique par une couche de séparation, par exemple une couche de glaise ou une feuille, en particulier pour arrêter la décomposition microbiologique générant des produits réactionnels malodorants afin de stabiliser au moins provisoirement les odeurs, éventuellement pour l'assainissement de décharges anciennes, procédé dans lequel on fait arriver, par des conduits d'aération et avec une pression supérieure à la pression atmosphérique, de l'air éventuellement enrichi en oxygène, aux substances biologiques d'une telle décharge à aération forcée, et dans lequel on prélève, de préférence par aspiration, par des conduits d'évacuation les gaz provenant des substances biologiques, caractérisé en ce que la quantité d'air introduite par les conduits d'aération est inférieure de 5 %, en particulier de 10 % en volume, à celle des gaz aspirés par les conduits d'évacuation, sur un intervalle d'intégration de quelques minutes, de préférence de 5 à 10 secondes, et en ce que les conduits d'aération des substances biologiques sont séparés éventuellement des zones de substances chimiques sans aération forcée par les conduits d'évacuation.

2. Procédé conforme à la revendication 1, caractérisé en ce que les conduits d'aération allant aux substances biologiques sont entourés de tous côtés de conduits d'évacuation, en particulier pour limiter la zone de dépôt à aération forcée.

3. Procédé conforme à la revendication 1 ou 2, caractérisé en ce que les gaz sont prélevés par aspiration à un niveau plus bas que l'arrivée d'air.

4. Procédé conforme à la revendication 1, 2 ou 3, caractérisé en ce que l'air introduit par les conduits d'aération est enrichi en oxygène en au moins une étape.

5. Procédé conforme à une des revendications 1 à 4, caractérisé en ce que l'air ou le mélange air/oxygène sont introduits de manière discontinue, en particulier par insufflation.

6. Procédé conforme à une des revendications 1 à 5 caractérisé en ce que l'air introduit par les conduits d'aération est chargé de vapeur d'eau.

7. Procédé conforme à une des revendications 1 à 6, caractérisé en ce que l'on ajoute aux substances biologiques, par les conduits d'aération et/ou les conduits d'évacuation, en particulier avant l'admission d'air, des microorgani- smes, par exemples en suspension dans de l'eau.

8. Procédé conforme à une des revendications 1 à 7, caractérisé en ce que l'on introduit par les conduits d'aération et/ou d'évacuation des substances nutritives, des oligoéléments ou des substances semblables pour accélérer la fermentation des substances biologiques.

9. Procédé conforme à une des revendications 1 à 8, caractérisé en ce que l'on mesure la température des substances organiques et/ou des gaz évacués, et que l'on contrôle l'arrivée d'air et/ou sa teneur en oxygène en fonction de cette température.

10. Procédé conforme à la revendication 9, caractérisé en ce que l'on alimente avec de l'air non enrichi en oxygène lorsqu'on atteint la limite supérieure de température, de préférence 50 _{°} C ou en particulier 70 _{°} C, et que l'on augmente de nouveau la teneur en oxygène dès que la température descend en particulier en dessous de 40 _{°} C.

11. Procédé conforme à la revendication 9 ou 10, caractérisé en ce que, lorsqu'on atteint la limite supérieure de température, de préférence 50 _{°} C et en particulier 70 _{°} C, on alimente les substances biologiques avec les gaz prélevés, enrichis en azote et/ou en dioxyde de carbone, en utilisant en particulier une qualité technique de ces gaz.

12. Procédé conforme à une des revendications 1 à 11, caractérisé en ce que le gaz aspiré est brûlé.

13. Procédé conforme à une des revendications 1 à 12, caractérisé en ce que les gaz aspirés sont émis dans l'atmosphère après avoir passé un filtre biologique.
